# FASCICULE DE BREVET EUROPEEN

(11) **EP 1 090 670 B1**
(45) Date de publication et mention de la délivrance du brevet: **06.01.2010**
(21) Numéro de dépôt: 00402671.2
(22) Date de dépôt: 27.09.2000
(51) Int. Cl.: B01D 53/047, B01D 53/04, F25J 3/04

(54) **Procédé de traitement d'un gaz par adsorption à température modulée**
Verfahren zur Behandlung eines Gases unter Verwendung von Temperaturwechseladsorption
Process for treating a gas using temperature swing adsorption

(30) Priorité: 08.10.1999 FR 9912577
(43) Date de publication de la demande: 11.04.2001
(73) Titulaire: L'AIR LIQUIDE, Société Anonyme pour l'Etude et l'Exploitation des Procédés Georges Claude, 75007 Paris (FR)
(72) Inventeur: Kraus, Georges, 75321 Paris Cedex 07 (FR); Le Bot, Patrick, 94300 Vincennes (FR); Sun, Lian-Ming, 91140 Villebon-sur-Yvette (FR)
(74) Mandataire: Le Moenner, Gabriel

(56) Documents cités:
- EP-A- 0 438 282
- EP-A- 0 862 937
- DE-A- 19 534 008
- US-A- 4 472 178
- US-A- 5 542 965
- US-A- 5 779 767
- US-A- 5 925 322

## Description

La présente invention est relative à un procédé de traitement d'un gaz par adsorption à température modulée (TSA ou Temperature Swing Adsorption), du type dans lequel on soumet chaque lit d'adsorbant à un cycle qui comprend successivement : une phase d'adsorption comprenant elle-même une étape d'adsorption à une température basse d'adsorption ; une phase de régénération de l'adsorbant comprenant elle-même une étape de dépressurisation, une étape de chauffage/élution au cours de laquelle le lit est balayé avec un gaz de chauffage/élution chaud, et une étape de refroidissement/élution au cours de laquelle le lit est balayé avec un gaz de refroidissement/élution froid ; et une phase de repressurisation.

L'invention s'applique en particulier à l'épuration, notamment en eau et en anhydride carbonique, de l'air atmosphérique destiné à être distillé.

Les adsorbants utilisés peuvent être de l'alumine activée, de l'alumine dopée, des zéolites (A, X, LSX,...), du gel de silice ou une succession de plusieurs de ces produits.

L'adsorption du CO₂, de l'eau et d'autres impuretés est favorisée par des températures faibles. Il est donc important que l'adsorption se fasse à basse température et, par suite, la mise en oeuvre universellement adoptée prévoit de refroidir entièrement l'adsorbant sensiblement à la température basse d'adsorption, qui est voisine de la température du gaz à traiter, avant de commencer la phase d'adsorption suivante. Cette manière de procéder présente également l'avantage, dans le cas d'une installation cryogénique disposée en aval, de minimiser le flux de chaleur envoyé dans cette installation lors du passage du lit en phase d'adsorption.

L'invention a pour but de permettre une réduction de l'investissement et/ou une augmentation de la productivité de l'installation située en aval, tout en conservant des performances d'adsorption satisfaisantes.

A cet effet, l'invention a pour objet un procédé selon la revendication 1. Le document US-A-4472178 décrit un procédé TSA avec un balayage froid (cold purge).

Des exemples de mise en oeuvre de l'invention vont maintenant être décrits en regard des dessins annexés, sur lesquels :
- la Figure 1 représente schématiquement une installation de distillation d'air à laquelle est appliqué le procédé de l'invention ;
- la Figure 2 est un diagramme qui illustre les étapes de chauffage/élution et de refroidissement/élution suivant l'invention ;
- la Figure 3 est un diagramme analogue à la Figure 2 qui illustre le début de la phase d'adsorption suivant l'invention ; et
- les Figures 4 et 5 sont des diagrammes qui illustrent deux exemples de mise en oeuvre de l'invention.

Les pressions indiquées ci-dessous sont des pressions absolues.

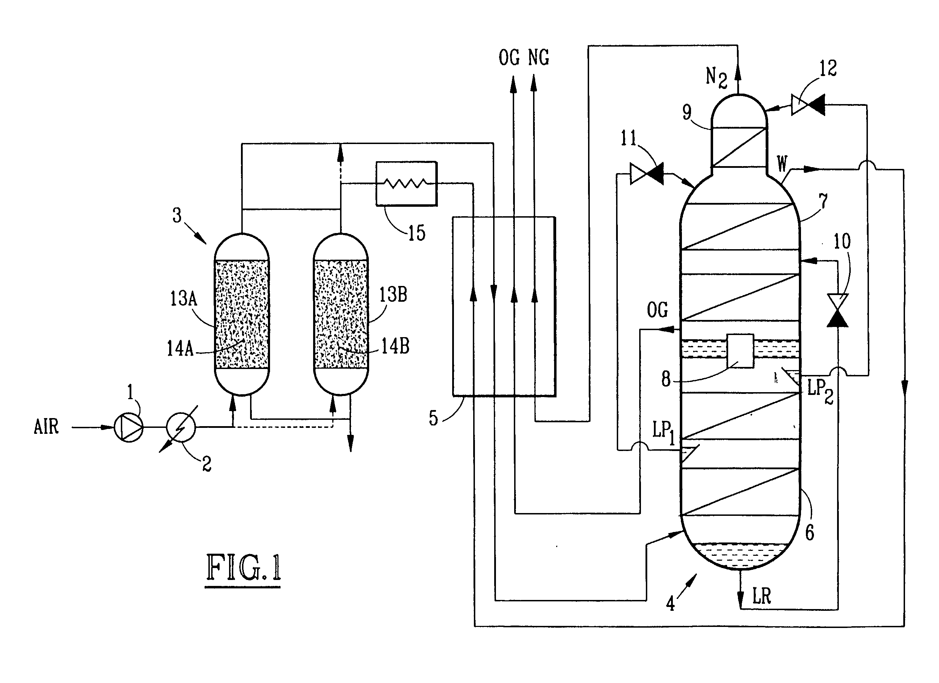

On a schématisé sur la Figure 1 une installation de production d'oxygène gazeux et d'azote gazeux basse pression par distillation d'air atmosphérique. Cette installation comprend essentiellement un compresseur d'air 1 équipé à sa sortie d'un réfrigérant 2 à air ou à eau, un appareil 3 d'épuration, notamment en eau et en CO₂, de l'air comprimé, une double colonne de distillation 4, et une ligne d'échange thermique 5 destinée à refroidir l'air épuré par échange de chaleur indirect avec les flux gazeux froids issus de la double colonne 4.

La double colonne 4 comprend essentiellement une colonne moyenne pression inférieure 6 surmontée d'une colonne basse pression 7. Un vaporiseur-condenseur 8 met en relation d'échange thermique la vapeur de tête (azote à peu près pur) de la colonne 6 avec le liquide de cuve (oxygène à peu près pur) de la colonne 7. Celle-ci est surmontée d'un tronçon de plus faible diamètre ou « minaret » 9 avec lequel son sommet communique librement.

En fonctionnement, l'air à traiter, comprimé en 1 à une moyenne pression MP de l'ordre de 5 à 6 bars, prérefroidi en 2, épuré en 3 et refroidi en 5 jusqu'au voisinage de son point de rosée, est introduit en cuve de la colonne 6. Le « liquide riche » de cuve (air enrichi en oxygène) de cette colonne est, après détente dans une vanne de détente 10, introduit en un emplacement intermédiaire de la colonne 7. Du « liquide pauvre inférieur » LP₁ (azote impur) soutiré d'un niveau intermédiaire de la colonne 6 est, après détente dans une vanne de détente 11, introduit au sommet de la colonne 7. Du « liquide pauvre supérieur » LP₂ (azote à peu près pur) soutiré en tête de la colonne 6 est, après détente dans une vanne de détente 12, introduit au sommet du minaret 9.

L'oxygène gazeux et l'azote gazeux de production sont soutirés respectivement en cuve de la colonne 6 et au sommet du minaret 9. Le gaz résiduaire W de la double colonne, constitué par de l'azote impur, est soutiré au sommet de la colonne 7. Ces trois flux gazeux, au voisinage de la pression atmosphérique PA, sont réchauffés dans la ligne d'échange 5 à contre-courant de l'air entrant.

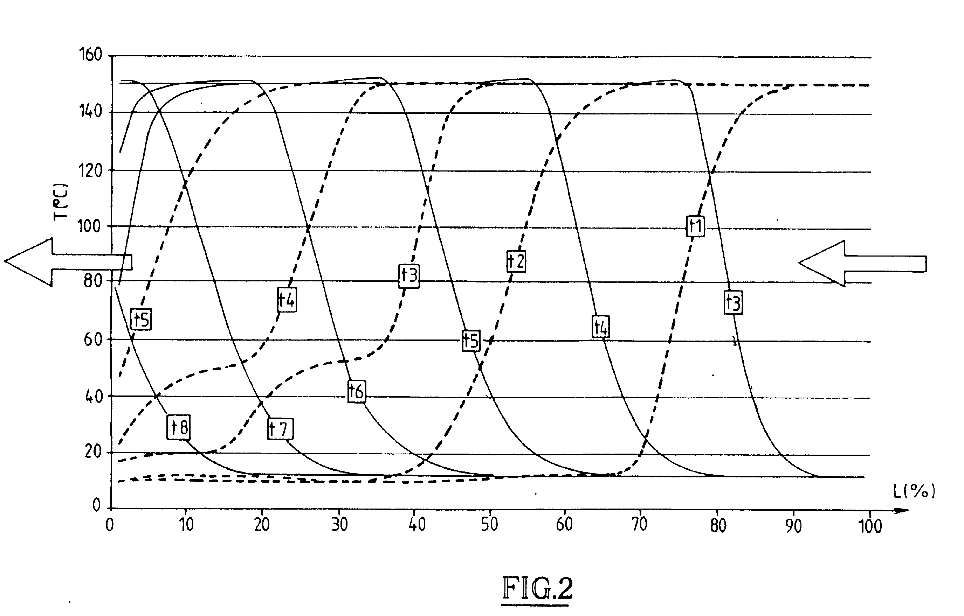

L'appareil d'épuration 3 comprend deux bouteilles 13A, 13B qui contiennent chacune un lit 14A, 14B d'un adsorbant qui est par exemple de l'alumine dopée. Chaque bouteille est soumise au cycle suivant :
(1) Une phase (a) d'adsorption à la moyenne pression MP. L'air issu du réfrigérant 2 est introduit à l'entrée (extrémité inférieure) de la bouteille, traverse le lit 14 de bas en haut, ressort épuré de la sortie de la bouteille, puis est dirigé vers la ligne d'échange 5.
(2) Une phase d'épuration comprenant plusieurs étapes :
   - Une étape (b) de décompression jusqu'à la pression atmosphérique.
   - Une étape (c) de chauffage/élution à contre-courant (c'est-à-dire de haut en bas), au moyen de gaz résiduaire W issu de la ligne d'échange puis chauffé vers 150°C par un réchauffeur 15.
      Au cours de cette étape, comme illustré en pointillés sur la Figure 2, où la longueur de la bouteille à partir de son extrémité d'entrée, est portée en abscisses tandis que la température de l'adsorbant est portée en ordonnées, un front de chaleur progresse de la sortie vers l'entrée de la bouteille (instants successifs t1 à t5). Cette étape se termine à un instant t2 prédéterminé, pour lequel le front de chaleur est entièrement contenu dans la bouteille.
   - Une étape (d) de refroidissement/élution à contre-courant, au moyen de gaz résiduaire W issu de la ligne d'échange et introduit dans la bouteille 13 à la température du bout chaud de la ligne d'échange, sans intervention du réchauffeur 15. Cette étape (d) débute à l'instant t2 précité.
      Au cours de cette étape, comme illustré en traits pleins sur la Figure 2, un front de refroidissement progresse de la sortie vers l'entrée de la bouteille (instants successifs t3 à t8). Cette étape se termine sensiblement lorsque, à l'instant t8, le front de refroidissement atteint l'entrée de la bouteille et bien avant que l'adsorbant situé près de cette entrée soit revenu au voisinage de la température normale ou basse d'adsorption. Cet instant est par exemple déterminé par une température du gaz d'élution sortant de 70°C.
(3) Une phase de repressurisation, comprenant une étape initiale (e) de remontée en pression jusqu'à la moyenne pression, puis une étape finale (f) de sécurité à cette moyenne pression.

Généralement, le début des étapes (b) et (e) s'effectue par équilibrage de pressions entre les deux bouteilles, tandis que la suite de l'étape (e) s'obtient en introduisant l'air à traiter dans l'entrée de la bouteille, la sortie de celle-ci étant fermée.

Lorsque la bouteille est remise en phase d'adsorption, une partie de l'adsorbant se trouve ainsi nettement au-dessus de la température normale ou basse d'adsorption, qui est voisine de la température de l'air à traiter pré-refroidi en 2, par exemple voisine de la température ambiante. Par suite, au début de la phase d'adsorption, un front de chaleur progresse dans la bouteille, jusqu'à sa sortie, de sorte que l'air entrant refroidit la totalité du lit jusqu'à la température normale d'adsorption.

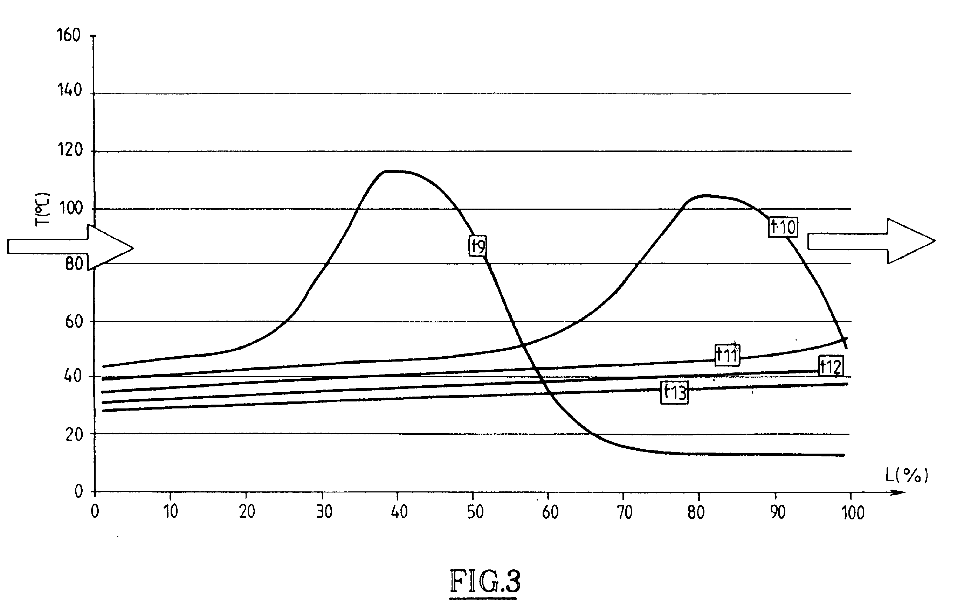

Ceci est illustré sur le diagramme de la Figure 3, qui est analogue à celui de la Figure 2, pour des instants successifs t9 à t13 postérieurs à l'instant t8.

Les avantages résultant du procédé décrit ci-dessus ressortent des deux exemples suivants.

### - Exemple comparatif :

L'adsorbant est l'alumine activée.

Les conditions opératoires sont les suivantes

| | |
|---|---|
| Température normale d'adsorption | 19 °C |
| Pression d'adsorption | 23 bars |
| Débit d'adsorption | 15000 Nm³/h |
| Température de régénération chaude | 150°C |
| Pression de régénération | 1,17 bar |
| Débit de régénération | 2650 Nm³/h |
| Température de fin de refroidissement de l'adsorbant | 19°C |

L'étape de refroidissement/élution (d) est poursuivie, de façon classique, jusqu'au refroidissement quasi-complet de l'adsorbant. A cet instant, le gaz d'élution sort de la bouteille au voisinage de la température basse d'adsorption (19°C dans cet exemple).

### - Exemple 1 conforme à l'invention

On conserve les conditions opératoires ci-dessus, mais on arrête l'étape (d) à une température de sortie de 70°C du gaz d'élution. On peut alors établir le tableau comparatif suivant.

| | Exemple comparatif | Exemple 1 |
|---|---|---|
| Etape | Durée (mn) | Durée (mn) |
| (a) Adsorption | 200 | 100 |
| (b) Dépressurisation | 9 | 9 |
| (c) Chauffage/élution | 45 | 21 |
| (d) Refroidissement/élution | 115 | 45 |
| (e) Remontée en pression | 17 | 11 |
| (d) Sécurité | 14 | 12 |
| Cycle total | 400 | 20C |

En effet, le refroidissement partiel de l'adsorbant en étape (d) se traduit, à débit constant du gaz d'élution, par un raccourcissement important de cette étape, et donc de l'ensemble de la phase de régénération, laquelle conditionne la durée de la phase d'adsorption (a). Celle-ci peut être réduit d'autant, de sorte que le volume d'adsorbant est diminué. A son tour, ceci permet de réduire les durées des phases (c), (e) et (f).

Au total, on voit que l'on peut réduire de moitié le temps de cycle, et donc réaliser une économie importante sur l'investissement.

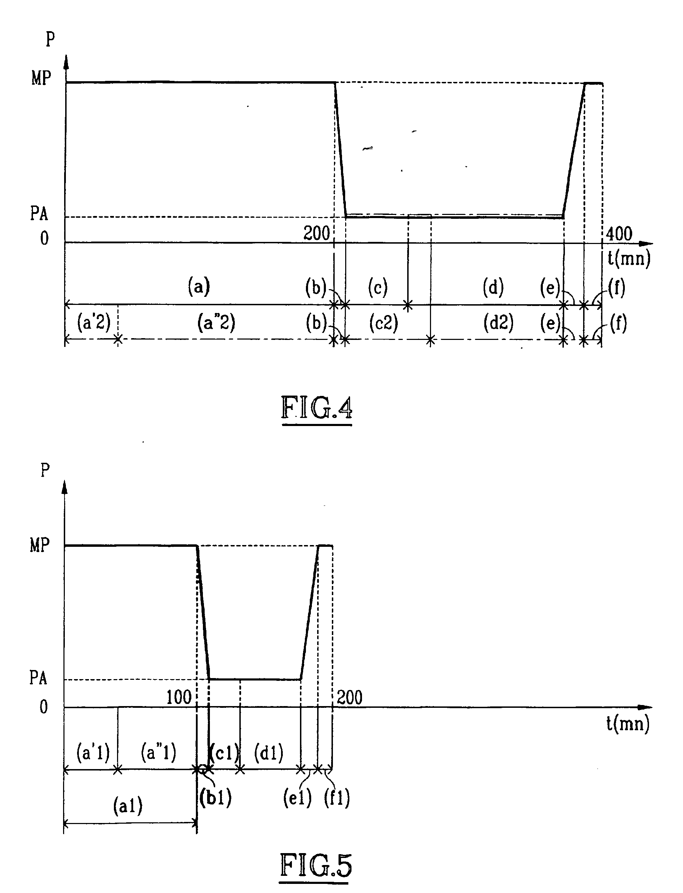

Les résultats ci-dessus sont illustrés par les deux courbes en traits pleins des Figures 4 et 5 relatives respectivement à l'Exemple comparatif et à l'Exemple 1. Ces courbes représentent la variation de la pression d'un lit en fonction du temps. Le cycle de l'Exemple 1 comprend ainsi successivement : une phase d'adsorption (a1) comprenant elle-même une étape initiale (a'1) d'adsorption à température relativement élevée et une étape finale (a"1) d'adsorption sensiblement à la température basse normale d'adsorption ; une étape (b1) de dépressurisation jusqu'à la pression atmosphérique ; une étape (c1) de chauffage/élution ; une étape (d1) de refroidissement partiel/élution ; une étape (e1) de remontée en pression ; et une étape (f1) de sécurité.

On a également représenté sur la Figure 4, en traits mixtes, une variante de mise en oeuvre de l'invention, qui constitue un Exemple 2.

Dans cette variante, on conserve le volume d'adsorbant ainsi que les durées des étapes (a), (b), (e) et (f) de l'Exemple comparatif, et on conserve également la durée totale d'élution (c) + (d).

Cependant, on réduit de 115 mn à 98 mn la durée de l'étape de refroidissement/élution (étape (d2)) pour obtenir le refroidissement partiel de l'adsorbant ; on allonge d'autant, de 45 mn à 62 mn, l'étape de chauffage/élution (étape (c2)) ; et on réduit corrélativement le débit du gaz d'élution, de 2650 à 1475 Nm³/h, puisque le volume d'adsorbant n'a pas changé.

La phase d'adsorption (a), quant à elle, est subdivisée en une étape initiale (a'2) d'adsorption à température relativement élevée, et en une étape finale (a"2) d'adsorption sensiblement à la température basse normale d'adsorption.

Cette variante permet d'économiser une fraction substantielle du gaz d'élution, et donc d'augmenter le débit total de gaz de production, à savoir le débit d'azote dans l'installation de la Figure 1. En d'autres termes, l'invention permet, dans cette variante, d'augmenter la productivité de l'installation.

Bien entendu, on peut envisager d'autres modes de mise en oeuvre de l'invention qui combinent les avantages de réduction de l'investissement et d'augmentation de la productivité.

Le front de chaleur qui traverse le lit en début de phase d'adsorption, illustré sur la Figure 3, se déplace plus rapidement que l'air entrant. Par suite, les étapes (a'1) et (a'2) sont courtes, et l'adsorbant atteint rapidement une température voisine de sa température normale d'adsorption, de sorte que les performances de l'adsorbant sont peu affectées par le refroidissement partiel décrit plus haut.

Si l'on veut réduire le pic de chaleur envoyé à la boîte froide (constituée essentiellement de la double colonne 4 et de la ligne d'échange 5) lors du passage en phase d'adsorption, on peut prévoir un court intervalle de temps au cours duquel les deux bouteilles 13A et 13B sont simultanément en adsorption, et les deux flux gazeux de production (air épuré) sont rassemblés avant d'être envoyés à la ligne d'échange, comme illustré en pointillés sur la Figure 1.

## Revendications

1. Procédé de traitement d'un gaz par adsorption à température modulée (TSA ou Temperature Swing Adsorption)dans au moins deux lits d'adsorbant (14A, 14B), du type dans lequel on soumet chaque lit d'adsorbant à un cycle qui comprend successivement : une phase d'adsorption ((a) ; (a1)) comprenant elle-même une étape d'adsorption ((a"1) ; (a"2)) à une température basse d'adsorption ; une phase de régénération de l'adsorbant comprenant elle-même une étape de dépressurisation ((b) ; (b1)), une étape de chauffage/élution ((c1) ; (c2)) au cours de laquelle le lit est balayé avec un gaz de chauffage/élution chaud, et une étape de refroidissement/élution ((d1) ; (d2)) au cours de laquelle le lit est balayé avec un gaz de refroidissement/élution froid; et une phase de repressurisation ((e, f) ; (e2, f2)),
dans lequel :
a) on termine l'étape de refroidissement/élution ((d1) ; (d2)) alors que le gaz de refroidissement/élution qui sort du lit se trouve à une température nettement supérieure à la température du gaz à traiter,
b) la phase d'adsorption comprend une étape initiale ((a1) ; (a2)) d'adsorption au cours de laquelle le lit se refroidit jusqu'à la température basse d'adsorption sous l'effet du gaz à traiter,
c) où, au cours d'au moins une première partie de l'étape initiale d'adsorption ((a1) ; (a2)), on branche le lit (14A, 14B) en parallèle avec un autre lit (14B, 14A) en fin de phase d'adsorption, et on réunit les deux courants de gaz issus de ces deux lits et
d) on termine l'étape de refroidissement/élution ((d1) ; (d2)) lorsque le gaz de refroidissement/élution qui sort du lit (14A, 14B) se trouve à une température supérieure d'au moins 30°C, de préférence d'au moins 50°C, à la température du gaz à traiter.

2. Procédé suivant la revendication 1, **caractérisé en ce que** le gaz à traiter est de l'air atmosphérique destiné à être distillé.

3. Procédé selon la revendication 2, **caractérisé en ce qu'**on termine l'étape de refroidissement/élution ((d1) ; (d2)) lorsque le gaz de refroidissement/élution qui sort du lit (14A, 14B) se trouve à une température supérieure de 70°C à celle du gaz à traiter.

4. Procédé selon la revendication 3 ou la revendication 3, **caractérisé en ce que** la durée d'un cycle total adsorption/régénération n'excède pas 200 minutes.

## Claims

1. Process for the treatment of a gas by temperature swing adsorption (TSA) in which at least two beds of adsorbent (14A, 14B), of the type in which each bed of adsorbent is subjected to a cycle which comprises, in succession: an adsorption phase ((a); (a1)) which itself comprises an adsorption step ((a"1); (a''2)) at a low adsorption temperature; an adsorbent regeneration phase which itself comprises a depressurization step ((b); (b1)); a heating/elution step ((c1); (c2)), during which the bed is purged with a hot heating/elution gas, and a cooling/elution step ((d1); (d2)), during which the bed is purged with a cold cooling/elution gas; and a repressurization phase ((e, f); (e2, f2)), in which:
(a) the cooling/elution step ((d1); (d2)) is terminated while the cooling/elution gas leaving the bed is at a markedly higher temperature than the temperature of the gas to be treated;
(b) the adsorption phase comprises an initial adsorption step ((a1); (a2)), during which the bed is cooled down to the low adsorption temperature due to the effect of the gas to be treated;
(c) where, during at least a first part of the initial adsorption step ((a1); (a2)), the bed (14A, 14B) is connected up in parallel with another bed (14B, 14A) at the end of the adsorption phase, and the two gas streams coming from these two beds are combined; and
(d) the cooling/elution step ((d1); (d2)) is terminated when the cooling/elution gas leaving the bed (14A, 14B) is at a temperature of at least 30°C greater, preferably at least 50°C greater, than the temperature of the gas to be treated.

2. Process according to Claim 1, **characterized in that** the gas to be treated is atmospheric air intended to be distilled.

3. Process according to Claim 2, **characterized in that** the cooling/elution step ((d1); (d2)) is terminated when the cooling/elution gas leaving the bed (14A, 14B) is at a temperature of 70°C greater than that of the gas to be treated.

4. Process according to Claim 2 or Claim 3, **characterized in that** the duration of a total adsorption/regeneration cycle does not exceed 200 minutes.

## Patentansprüche

1. Verfahren zur Behandlung eines Gases durch Temperaturwechseladsorption (TSA oder Temperature Swing Adsorption) in mindestens zwei Adsorptionsmittelschüttungen (14A, 14B) des Typs, bei dem jede Adsorptionsmittelschüttung einem Zyklus unterworfen wird, der nacheinander eine Adsorptionsphase ((a); (a1)), die selbst einen Adsorptionsschritt ((a"1); (a"2)) bei einer niedrigen Adsorptionstemperatur umfaßt; eine Adsorptionsmittelregenerationsphase, die selbst einen Entspannungsschritt ((b); (b1)), einen Erwärmungs-/Elutionsschritt ((c1); (c2)), in dessen Verlauf die Schüttung mit einem heißen Erwärmungs-/Elutionsgas gespült wird, und einen Abkühlungs-/Elutionsschritt ((d1); (d2)), in dessen Verlauf die Schüttung mit einem kalten Abkühlungs-/Elutionsgas gespült wird, umfaßt; und eine Phase der erneuten Druckbeaufschlagung ((e, f); (e2, f2)) umfaßt,
bei dem:
a) man den Abkühlungs-/Elutionsschritt ((d1); (d2)) beendet, während sich das aus der Schüttung austretende Abkühlungs-/Elutionsgas bei einer Temperatur befindet, die deutlich über der Temperatur des zu behandelnden Gases liegt,
b) die Adsorptionsphase einen Anfangsadsorptionsschritt ((a1); (a2)) umfaßt, in dessen Verlauf sich die Schüttung infolge des Effekts des zu behandelnden Gases auf die niedrige Adsorptionstemperatur abkühlt,
c) wobei man im Verlauf mindestens eines ersten Teils des Anfangsadsorptionsschritts ((a1); (a2)) die Schüttung (14A, 14B) mit der anderen Schüttung (14B, 14A) am Ende der Adsorptionsphase parallel schaltet und die beiden Gasströme aus diesen beiden Schüttungen vereinigt, und
d) man den Abkühlungs-/Elutionsschritt ((d1); (d2)) beendet, während sich das aus der Schüttung (14A, 14B) austretende Abkühlungs-/Elutionsgas bei einer Temperatur befindet, die um mindestens 30°C und vorzugsweise um mindestens 50°C über der Temperatur des zu behandelnden Gases liegt.

2. Verfahren nach Anspruch 1, **dadurch gekennzeichnet, daß** es sich bei dem zu behandelnden Gas um zu destillierende Atmosphärenluft handelt.

3. Verfahren nach Anspruch 2, **dadurch gekennzeichnet, daß** man den Abkühlungs-/Elutionsschritt ((d1); (d2)) beendet, während sich das aus der Schüttung (14A, 14B) austretende Abkühlungs-/Elutionsgas bei einer Temperatur befindet, die um 70°C über der Temperatur des zu behandelnden Gases liegt.

4. Verfahren nach Anspruch 2 oder Anspruch 3, **dadurch gekennzeichnet, daß** die Dauer eines gesamten Adsorptions-/Regenerationszyklus höchstens 200 Minuten beträgt.
